# EUROPEAN PATENT SPECIFICATION

(11) **EP 1 853 660 B1**
(45) Date of publication and mention of the grant of the patent: **23.06.2010**
(21) Application number: 06708373.3
(22) Date of filing: 20.02.2006
(51) Int. Cl.: C08K 5/00, C08K 5/3435, C08K 5/5317, C08K 5/10, C08K 5/134, C08K 5/13, C08K 5/18

(54) **STABILIZATION OF POLYOL OR POLYURETHANE COMPOSITIONS AGAINST THERMAL OXIDATION**
STABILISIERUNG VON POLYOL- ODER POLYURETHANZUSAMMENSETZUNGEN GEGEN THERMISCHE OXIDATION
STABILISATION DE COMPOSITIONS DE POLYOL OU DE POLYURETHANE CONTRE L OXYDATION THERMIQUE

(30) Priority: 01.03.2005 EP 05101528
(43) Date of publication of application: 14.11.2007
(73) Proprietor: BASF SE, 67056 Ludwigshafen (DE)
(72) Inventor: MÄDER, Dietmar, 61440 Oberursel (DE)
(86) International application number: PCT/EP2006/060086
(87) International publication number: WO 2006/092363

(56) References cited:
- US-A- 4 721 531
- US-A- 5 624 982
- US-A1- 2003 077 469

## Description

The present invention pertains to compositions comprising a polyester polyol, a polyether polyol, an acrylic polyol, a polycarbonate polyol, a polybutadiene polyol, a hydrogenated polybutadiene polyol, a functionalized polyether and/or a polyurethane susceptible to thermal degradation, and at least one of two specified antioxidants and optionally further antioxidants. The present invention also pertains to the use of such stabilizer (blends) in said polyols, functionalized polyether and/or polyurethane against thermal degradation and a process for stabilizing said polyols, functionalized polyether and/or polyurethane with such stabilizer (blends) against thermal degradation.

US 2002/086743 relates to compositions comprising bis(1,2,2,6,6-pentamethyl-4-piperidinyl)-[[3,5-bis(1,1-dimethylethyl)-4-hydroxyphenyl]methyl]butylmalonate and a polyether polyol, a polyester polyol or a polyurethane.

US 4721531 pertains to compositions comprising bis(1,2,2,6,6-pentamethyl-4-piperidinyl)-[[3,5-bis(1,1-dimethylethyl)-4-hydroxyphenyl]methyl]butylmalonate, pigments and a polyether polyol or polyester polyol.

EP714931A pertains to compositions comprising bis(1,2,2,6,6-pentamethyl-4-piperidinyl)-[[3,5-bis(1,1-dimethylethyl)-4-hydroxyphenyl]methyl]butylmalonate, UV absorber and polyurethane.

US2004/096666 describes a combination of bis(1,2,2,6,6-pentamethyl-4-piperidinyl)-[[3,5-bis(1,1-dimethylethyl)-4-hydroxyphenyl]methyl]butylmalonate and pentaerythritol tetrakis(3-(3,5-di-tert-butyl-4-hydroxyphenyl)propionate) in polyurethane.

DN 125:198068 of JP08165323 relates to a composition comprising bis(1,2,2,6,6-pentamethyl-4-piperidinyl)-[[3,5-bis(1,1-dimethylethyl)-4-hydroxyphenyl]methyl]butylmalonate, ethylenebis(oxyethylene)bis-(3-(5-tert-butyl-4-hydroxy-m-tolyl)-propionate), a colorant and a polyether polyol.

WO 2002/044258 relates to bis(1,2,2,6,6-pentamethyl-4-piperidinyly[[3,5-bis(1,1-dimethylethyl)-4-hydroxyphenyl]methyl]butylmalonate in polyether polyol.

WO2004/068217 describes combinations of bis(1,2,2,6,6-pentamethyl-4-piperidinyl)-[[3,5-bis(1,1-dimethylethyl)-4-hydroxyphenyl]methyl]butylmalonate and pentaerythritol tetrakis(3-(3,5-di-tert-butyl-4-hydroxyphenyl)propionate) in photochromic polyurethane films or in photochromic polyester polyol.

CA 2000:300943 of JP 2000/129145A relates to combinations of bis(1,2,2,6,6-pentamethyl-4-piperidinyl)-[[3,5-bis(1,1-dimethylethyl)-4-hydroxyphenyl]methyl]butylmalonate and ethylene-bis(oxyethylene)bis-(3-(5-tert-butyl-4-hydroxy-m-tolyl)-propionate) in polyether polyol with substituted silyl groups.

Bellatini et al. describes in Cellular Polymers 3 (1984), 241-247, bis(1,2,2,6,6-pentamethyl-4-piperidinyl)-[[3,5-bis(1,1-dimethylethyl)-4-hydroxyphenyl]methyl]butylmalonate in polyurethane.

DN 127:96261 of JP09141809 relates to (((1,1-dimethylethyl)-4-hydroxyphenyl)methyl)ethylphosphonate in polyurethane.

DN 110:76695 relates to compositions comprising polyurethane, UV absorber, bis(1,2,2,6,6-pentamethyl-4-piperidinyl)-[[3,5-bis(1,1-dimethylethyl)-4-hydroxyphenyl]methyl]butylmalonate and pentaerythritol tetrakis(3-(3,5-di-tert-butyl-4-hydroxyphenyl)propionate) or ethylene-bis(oxyethylene)bis-(3-(5-tert-butyl-4-hydroxy-m-tolyl)-propionate). Said document also describes compositions comprising (((1,1-dimethylethyl)-4-hydroxyphenyl)methyl)ethylphosphonate and polyurethane.

Polyol, functionalized polyether and/or polyurethane compositions comprising the instant antioxidant or instant antioxidant blend exhibit excellent stability in terms of thermal and storage stability.

The present invention pertains to a composition comprising
(a) a polyester polyol, a polyether polyol, an acrylic polyol, a polycarbonate polyol, a polybutadiene polyol, a hydrogenated polybutadiene polyol, a functionalized polyether and/or a polyurethane, and
(b) an antioxidant of formula (101) and/or (102), 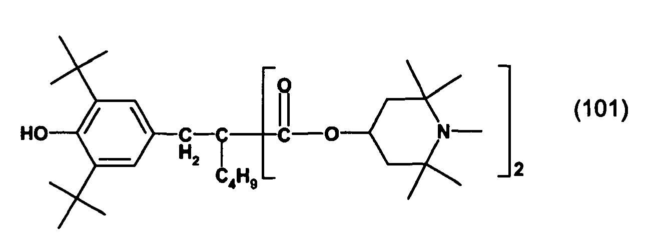 (bis(1,2,2,6,6-pentamethyl-4-piperidinyl)-[[3,5-bis(1,1-dimethylethyl)-4-hydroxyphenyl]methyl]butylmalonate; TINUVIN® 144; CAS No. 63843-89-0) 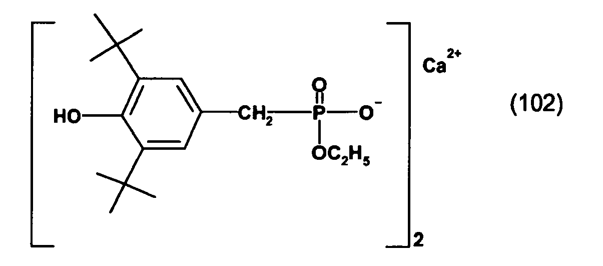 (calcium salt of (((1,1-dimethylethyl)-4-hydroxyphenyl)methyl)ethylphosphonate; IRGANOX® 1425; CAS No. 65140-91-2)
   and
(c) optionally a further antioxidant against thermal degradation,
with the proviso
that the composition contains a further antioxidant (c) if component (b) is the antioxidant of formula (101),
that if component (a) is a polyurethane and component (b) is the antioxidant of formula (102), component (c) is present in the composition,
that component (a) is not a polyester polyol, a polyether polyol or a polyurethane if the antioxidants are a combination of the compounds of formulae (101) and (103) or (101) and (104) 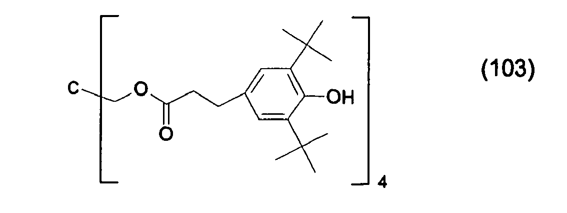 (pentaerythritol tetrakis(3-(3,5-di-tert-butyl-4-hydroxyphenyl)propionate); IRGANOX® 1010; CAS No. 6683-19-8) 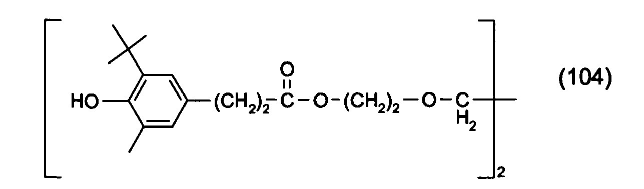 (ethylenebis(oxyethylene)bis-(3-(5-tert-butyl-4-hydroxy-m-tolyl)-propionate); IRGANOX® 245; CAS No. 36443-68-2).

Examples of further antioxidants are given in a list below under 1. antioxidants.

For example, component (b) is the antioxidant of formula (101) in the present composition.

An example of the present composition is, wherein component (b) is the antioxidant of formula (102).

An embodiment of the invention is the composition, wherein component (b) is a combination of the antioxidants of formula (101) and (102).

Another embodiment of the invention is the composition, wherein component (c) is present.

Of interest is the composition, wherein component (c) is a phenolic or aminic antioxidant. Examples of phenolic antioxidants are given in the list below under items 1.1-1.17, especially under items 1.1, 1.13 and 1.14, and examples of aminic antioxidants are given in the list below under item 1.19.

Of further interest is the composition, wherein the further antioxidant (c) is a compound of formula (103) - (108)

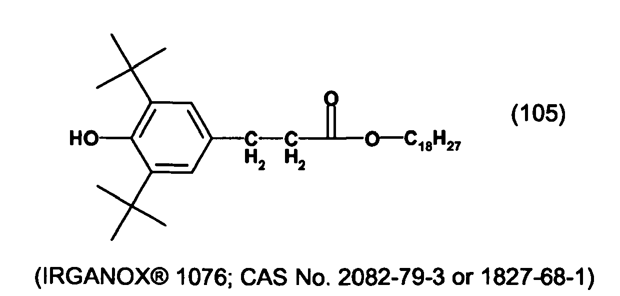

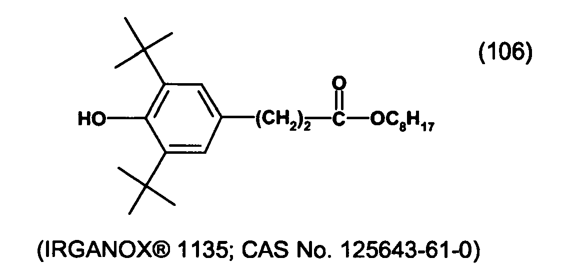

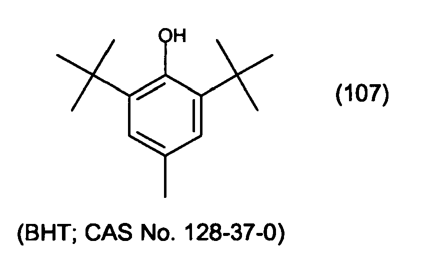

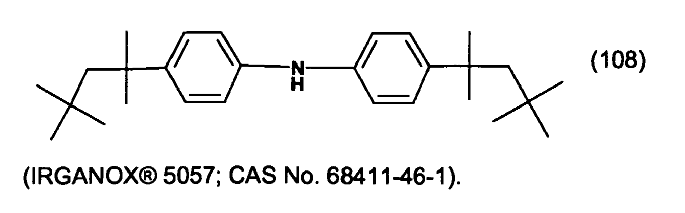

For instance, the composition contains component (c), whereby component (b) is the antioxidant of formula (101) and component (c) is a further antioxidant of formula (103)-(108). For example, the composition contains component (c), whereby component (b) is the antioxidant of formula (102) and component (c) is a further antioxidant of formula (103)-(108).

Preference is given to the composition, wherein the antioxidant (b) and the further antioxidant (c) are
i) a combination of component (101) and (102),
ii) a combination of component (101) and (103),
iii) a combination of component (101) and (104),
iv) a combination of component (102) and (103) or
v) a combination of component (102) and (104).

A polyester polyol, a polyether polyol, an acrylic polyol, a polycarbonate polyol, a polybutadiene polyol, a hydrogenated polybutadiene polyol, a functionalized polyether and/or a polyurethane suitable for use in the present invention may be, for example,
polyester polyols: polybutanediol adipate, polyhexanediol adipate, phthalic anhydride-based polyester polyol,
polyester polyol made from caprolactone;
polyether polyols: polyoxyethylene glycol, polyoxypropylene-glycol, polytetramethylene ether glycol, poly(oxyethylene-co-oxypropylene)-glycol;
acrylic polyols: obtained from free radical copolymerization of an allylic alcohol, an alkyl acrylate or methacrylate, and optionally a vinyl comonomer such as vinyl aromatics, vinyl ethers, and vinyl esters; the allylic alcohol be allyl alcohol, methallyl alcohol, allyl alcohol propoxylates, and/or allyl alcohol ethoxylates; the alky acrylate may be methacrylate and/or n-butyl acrylate; or these acrylic polyols are polyacrylate polyol or polymethacrylate polyol;
polycarbonate polyols: obtained from the reaction of diols such as 1,3-propanediol, 1,4-butanediol, 1,6-hexanediol, diethylene glycol, triethylene glycol, tetraethylene glycol, and mixtures thereof with diarylcarbonates such as diphenylcarbonate or phosgene;
polybutadiene polyol;
hydrogenated polybutadiene polyol;
functionalized polyethers: silyl-terminated polyethers
polyurethanes: derived from hydroxyl-terminated polyethers, polyesters or polybutadienes on the one hand and aliphatic or aromatic polyisocyanates on the other, as well as precursors thereof.

For instance, the component (a) is not a silyl-terminated polyether, for example is not a functionalized polyether.

Of interest are the instant compositions, wherein component (a) is a polyester polyol and/or a polyether polyol, especially the ones listed above.

Preferably, the present composition comprises further additives.

Examples of further additives are compiled in the list below.

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-di-tert-butyl-4-sec-butylphenol, 2,6-di-tert-butyl-4-nonylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.
1.2. Alkylthiomethylphenols, for example 2,4-dioctylthiomethyl-6-tert-butylphenol, 2,4-dioctyl-thiomethyl-6-methylphenol, 2,4-dioctylthiomethyl-6-ethylphenol, 2,6-di-dodecylthiomethyl-4-nonylphenol.
1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
1.4. Tocopherols, for example α-tocopherol, β-tocopherol, γ-tocopherol, δ-tocopherol and mixtures thereof (vitamin E).
1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl) disulfide.
1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(a-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis(5-tert-butyl-4-hydroxy2-methylphenyl)-4-n-dodecylmercaptobutane, 1,1,5,5-tetra-(5-tert-butyl-4-hydroxy-2-methylphenyl)pentane.
1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, didodecylmercaptoethyl-2,2-bisl(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicydohexyl-4-hydroxybenzyl)isocyanurate.
1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate.
1.12. Acylaminophenols, for example 4-hydroxylauranilide, 4-hydroxystearanilide, octyl N-(3,5-di-tert-butyl-4-hydroxyphenyl)carbamate.
1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; C₁₃-C₁₅alkyl ester of β-(3,5-di-tert-butyl-4-hydroxyphenyl)propionic acid (CAS-No. 171090-93-0).
1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.
1.15. Esters of β-(3,5-dicyclohexyl-4-hydroxyphenyl) acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard^{®}XL-1, supplied by Uniroyal).
1.18. Ascorbic acid (vitamin C)
1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, 4,4'-bis(α,α-dimethylbenzyl)diphenylamine, reaction product of N-phenylbenzeneamine with isobutylene and 2,4,4-trimethylpentene, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)-biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octyl-phenothiazines, N-allylphenothiazine, N,N,N',N'-tetraphenyl-1,4-diaminobut-2-ene.
2. UV absorbers and light stabilizers
2.1. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl-2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)carbonylethyl]-2'-hydroxyphenyl)₋5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; [R-CH₂CH₂-COO-CH₂CH₂⁆₂, where R = 3'-tert-butyl-4'-hydroxy-5'-2H-benzotriazol-2-ylphenyl,
2-[2'-hydroxy-3'-(α,α-dimethylbenzyl)-5'-(1,1,3,3-tetramethylbutyl)-phenyl]benzotriazole; 2-[2'-hydroxy-3'-(1,1,3,3-tetramethylbutyl)-5'-(α,α-dimethylbenzyl)-phenyl]benzotriazole.
2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
2.3. Esters of substituted and unsubstituted benzoic acids, for example 4-tert-butyl-phenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate, N-(β-carbomethoxy-β-cyanovinyl)-2-methylindoline, neopentyl tetra(α-cyano-β,β-diphenylacrylate.
2.5. Nickel compounds, for example nickel complexes of 2,2'-thio-bis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.
2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-a-olefin copolymer with 2,2,6,6-tetramethyl-4-aminopiperidine or 1,2,2,6,6-pentamethyl-4-aminopiperidine, 2,4-bis[N-(1-cyclohexyloxy-2,2,6,6-tetramethylpiperidine-4-yl)-N-butylamino]-6-(2-hydroxyethyl)amino-1,3,5-triazine, 1-(2-hydroxy-2-methylpropoxy)-4-octadecanoyloxy-2,2,6,6-tetramethylpiperidine, 5-(2-ethylhexanoyl)-oxymethyl-3,3,5-trimethyl-2-morpholinone, Sanduvor (Clariant; CAS Reg. No. 106917-31-1], 5-(2-ethylhexanoyl)oxymethyl-3,3,5-trimethyl-2-morpholinone, the reaction product of 2,4-bis-[(1-cyclohexyloxy-2,2,6,6-piperidine-4-yl)butylamino]-6-chloro-s-triazine with N,N'-bis(3-aminopropyl)ethylenediamine), 1,3,5-tris(N-cyclohexyl-N-(2,2,6,6-tetramethylpiperazine-3-one-4-yl)amino)-s-triazine, 1,3,5-tris(N-cyclohexyl-N-(1,2,2,6,6-pentamethylpiperazine-3-one-4-yl)-amino)-s-triazine.
2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine, 2,4-bis(4-[2-ethylhexyloxy]-2-hydroxyphenyl)-6-(4-methoxyphenyl)-1,3,5-triazine.
3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-dicumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.
   The following phosphites are especially preferred:
   Tris(2,4-di-tert-butylphenyl) phosphite (Irgafos^{®}168, Ciba Specialty Chemicals Inc.), tris(nonylphenyl) phosphite, 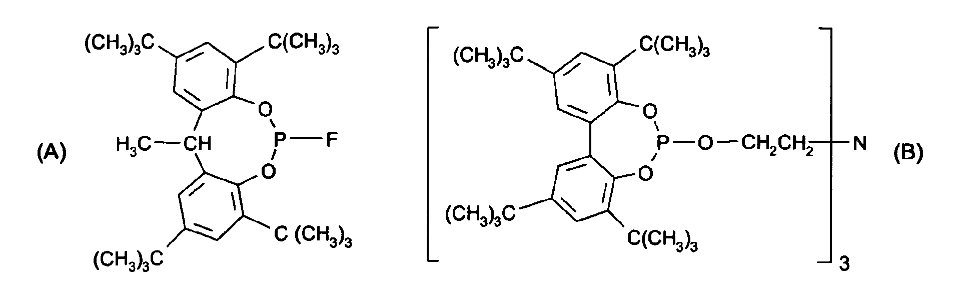 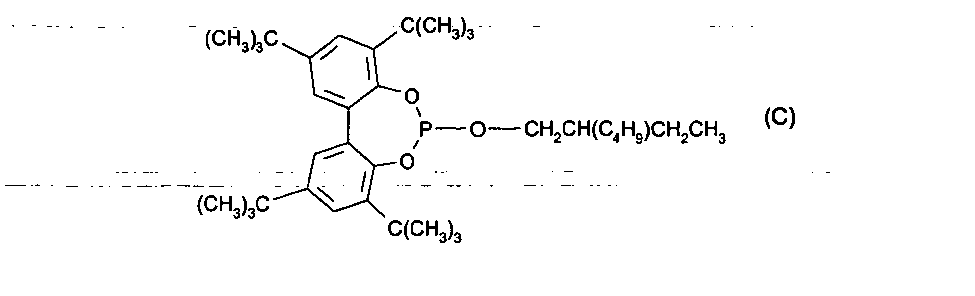 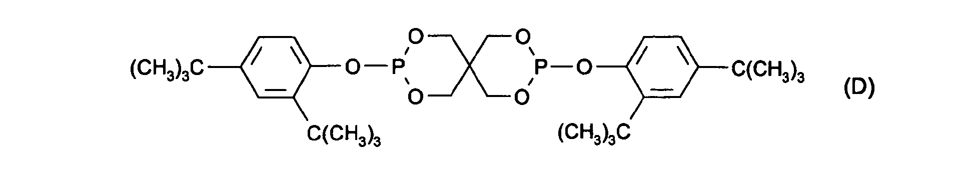 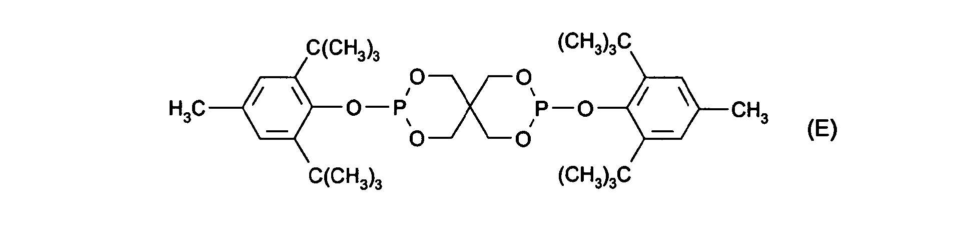 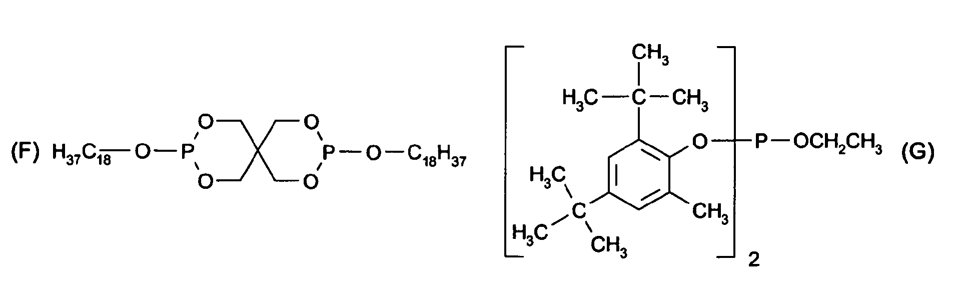
5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example, N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecylnnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.
7. Thiosynergists, for example dilauryl thiodipropionate, dimistryl thiodipropionate, distearyl thiodipropionate or distearyl disulfide.
8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Polyamide stabilizers, for example copper salts in combination with iodides and/or phosphorus compounds and salts of divalent manganese.
10. Basic co-stabilizers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.
11. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyldibenzylidene)sorbitol, and 1,3:2,4-di(benzylidene)sorbitol.
12. Fillers and reinforcing agents, for example calcium carbonate, silicates, glass fibres, glass beads, asbestos, talc, kaolin, mica, barium sulfate, metal oxides and hydroxides, carbon black, graphite, wood flour and flours or fibers of other natural products, synthetic fibers.
13. Other additives, for example plasticisers, lubricants, emulsifiers, pigments, rheology additives, catalysts, flow-control agents, optical brighteners, antistatic agents and blowing agents.
14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839, EP-A-0591102; EP-A-1291384 or 3-[4-(2-acetoxyethoxy)phenyl]-5,7-di-tert-butylbenzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one, 3-(2-acetyl-5-isooctylphenyl)-5-isooctylbenzofuran-2-one.
15. Flame retardants, for instance, halogenated benzenes, biphenyls, phenols, ethers or esters thereof, bisphenols, diphenyloxides, aromatic carboxylic acids or polyacids, anhydrides, amides or imides thereof; organic cycloaliphatic or polycycloaliphatic halogenated compounds; and organic aliphatic halogenated compounds such as halogenated paraffins, oligo- or polymers, alkylphosphates or alkylisocyanurates. These components are largely known in the art, see e.g. US patents Nos. 4,579,906 (e.g. col. 3, lines 30-41), 5,393,812; see also Plastics Additives Handbook, Ed. by H. Zweifel, 5th Ed., Hanser Publ., Munich 2001, pp. 681-698; or tetraphenyl resorcinol diphosphite (FYROFLEX® RDP, Akzo Nobel), chloroalkyl phosphate esters (ANTIBLAZE^{®} AB-100, Albright & Wilson; FYROL^{®} FR-2, Akzo Nobel), polybrominated diphenyl oxide (DE-60F, Great Lakes Corp.), decabromodiphenyl oxide (DBDPO; SAYTEX^{®} 102E), tris[3-bromo-2,2-bis(bromomethyl)propyl] phosphate (PB 370^{®}, FMC Corp.), bis(2,3-dibromopropyl ether) of bisphenol A (PE68), brominated epoxy resin, ethylene-bis(tetrabromophthalimide) (SAYTEX^{®} BT-93), bis(hexachlorocyclopentadienoxyclooctane (DECLORANE PLUS^{®}), chlorinated paraffins, 1,2-bis(tribromophenoxy)ethane (FF680), tetrabromo-bisphenol A (SAYTEX^{®} RB100 or SAYTEX CP-2000), ethylene bis-(dibromo-norbornanedicarboximide) (SAYTEX^{®} BN-451), bis-(hexachlorocyclopentadieno) cyclooctane (DECLORANE Plus®), tris-(2,3-dibromopropyl)-isocyanurate, ethylene-bis-tetrabromophthalimide, 1,2,5,6,9,10-hexabromo-cyclo-dodecan, ethane-1,2-bis(pentabromophenyl), tetrabromobisphenol A-bis-(allyl ether), dibromocyclohexane, tribromophenol-cyanurate (Dead Sea® FR-245), tris(2-chloroethyl)phosphate, tris(2,3-dibromopropyl)phosphate, tris(2,3-dichloropropyl)phosphate, chlorendic acid, tetrachlorophthalic acid, tetrabromophthalic acid, bis(N,N'-hydroxyethyl)tetrachloro-phenylenediamine, poly-β-chloroethyltriphosponate-mixture, octabromodiphenylether, hexachlorocyclopentadiene-derivate, ethylene-bis(dibromonorbornanedicarboximide) (Saytex^{®} BN-451), bis-(hexachloorcyclopentadiene)-cyclooctane, polytetrafluoroethylene (Teflon^{®} GC) with or without addition of an antimony synergist such as Sb₂O₃; tetraphenyl resorcinol diphosphite (FYROFLEX® RDP, Akzo Nobel), triphenyl phosphate, ammonium polyphosphate (APP or HOSTFLAM® AP750), resorcinol diphosphate ogliomer (RDP), ethylenediamine diphosphate (EDAP), trioctylphosphate, tricresylphosphate, tetrakis(hydroxymethyl)phosphoniumsulfide, diethyl-N,N-bis(2-hydroxyethyl)-aminomethylphosphonate, hydroxyalkylesters of phosphoric acid, phosphazene flame retardants; magnesium hydroxide; zinc oxide, molybdenum trioxide, Sb₂O₅, Sb₂O₃; melamine phosphate (MELAPUR^{®} MP), melamine pyrophosphate, melamine ammonium polyphosphate, melamine ammonium pyrophosphate, melamine cyanurate (MELAPUR® MC), melamine borate, melamine polyphosphate (Melapur® 200), melamine cyanurate (Melapur® MC50); or the reaction product of 2,4-bis[(1-cyclohexyloxy-2,2,6,6-piperidin-4-yl)butylamino]-6-chloro-s-triazine with N,N'-bis(3-aminopropyl)ethylenediamine) [CAS 191680-81-6], 1-(2-hydroxy-2-methylpropoxy)-4-octadecanoyloxy-2,2,6,6-tetramethylpiperidine; or alumina trihydrate, aluminium salt of diethylphosphonic acid (DEPAL®); or zinc borate; or oligomeric diisopropyl benzene, silica, silicone, calcium silicate, magnesium silicate, calcium sulfate or magnesium carbonate.

The additives and in particular the antioxidants mentioned herein are mainly commercially available.

For instance, the further additives except flame retardants are added in concentrations of 0.01 to 10% relative to the total weight of the instant compositions. For example, flame retardants are added in concentrations of 0.1 to 20%, especially 0.1-10%, relative to the total weight of the instant compositions.

Of interest is the composition, comprising as further additives antioxidants different from (b) and (c), light stabilizers, processing stabilizers, flame retardants, antimicrobials, antigasfading agents and/or optical brighteners, for example the ones listed above.

Of-more interest is the composition, comprising as further additives phenolic and/or aminic antioxidants different from (b) and (c), hindered amine light stabilizers, UV-absorbers, phosphites, phosphonites, benzofuranones and/or flame retardants, especially the ones listed above.

Of utmost interest is the composition, comprising as further additives hindered amine light stabilizers and/or UV-absorbers, for instance the ones in the list above under item 2.

Preferred are compositions, wherein the overall amount of components (b) and (c) is 0.01% to 5%, for example 0.5% to 2%, based on the weight of the composition.

Of interest are compositions, wherein the ratio of components (b):(c) or of the compounds of formulae (101):(102) respectively is from 10:1 to 1:10, especially from 3:1 to 1:3.

Of further interest is the use of an antioxidant (b) of formula (101) and/or (102) as defined above and optionally a further antioxidant (c) as stabilizer in (a) a polyester polyol, a polyether polyol, an acrylic polyol, a polycarbonate polyol, a polybutadiene polyol, a hydrogenated polybutadiene polyol, a functionalized polyether and/or a polyurethane against thermal degradation,
with the proviso
that the component (a) is not polyurethane if component (b) is the antioxidant of formula (101) and component (c) is not present.

Preferably, the proviso above is that the composition contains a further antioxidant (c) if component (b) is the antioxidant of formula (101),
that if component (a) is a polyurethane and component (b) is the antioxidant of formula (102), component (c) is present in the composition,
that component (a) is not a polyester polyol or a polyurethane if the antioxidants are a combination of the compounds of formulae (101) and (103), and
that component (a) is not a polyether polyol or a polyurethane if the antioxidants are a combination of the compounds of formulae (101) and (104).

Most preferably, the proviso above is that the composition contains a further antioxidant (c) if component (b) is the antioxidant of formula (101),
that if component (a) is a polyurethane and component (b) is the antioxidant of formula (102), component (c) is present in the composition, and
that component (a) is not a polyester polyol, a polyether polyol or a polyurethane if the antioxidants are a combination of the compounds of formulae (101) and (103) or (101) and (104).

Preferences for components (a) and (b) are as given above.

An example is the use of an antioxidant (b) and optionally a further antioxidant (c) in combination with at least one further additive, especially the further additives described above.

Another embodiment of this invention is a process for stabilizing (a) a polyester polyol, a polyether polyol, an acrylic polyol, a polycarbonate polyol, a polybutadiene polyol, a hydrogenated polybutadiene polyol, a functionalized polyether and/or a polyurethane against thermal degradation with (b) an antioxidant of formula (101) and/or (102) and (c) optionally a further antioxidant against thermal degradation
with the proviso
that the component (a) is not a polyurethane if component (b) is the antioxidant of formula (101) and component (c) is not present.

Preferences for further provisos and/or components (a) and (b) are as given above.

Another example is the instant process, wherein the antioxidant (b) and optionally further antioxidant (c) is used in combination with at least one further additive, especially the further additives described above.

The polyester polyol, polyether polyol, acrylic polyol, polycarbonate polyol, polybutadiene polyol, hydrogenated polybutadiene polyol, functionalized polyether and/or polyurethane composition of the present invention may be also a foam (flexible, rigid, integral), a microcellular foam, a cast PU, a PU skin, a PU hot melt adhesive, a silylated polyurethane (SPUR), a silyl-terminated polyether, a thermoplastic polyurethane (TPU) a PU elastomer, artifical leather, PU skin, PU stray coating or reaction injection molding (RIM).

For example, the polyether polyol, polyester polyol, acrylic polyol, polycarbonate polyol, polybutadiene polyol, hydrogenated polybutadiene polyol, functionalized polyether and/or polyurethane composition of the present invention is not foamed.

For instance, acrylic polyol, polycarbonate polyol, polybutadiene polyol, hydrogenated polybutadiene polyol and functionalized polyether are commercially available.

The polyurethanes are obtained, for example, by reacting polyethers, polyesters and polybutadienes which contain terminal hydroxyl groups, i.e. polyols, with aliphatic or aromatic polyisocyanates.

Polyethers and polyesters having terminal hydroxyl groups are known and are prepared, for example, by polymerizing epoxides such as ethylene oxide, propylene oxide, butylene oxide, tetrahydrofuran, styrene oxide or epichlorohydrin with themselves, for example in the presence of BF₃, or by addition reaction of these epoxides, alone or as a mixture or in successsion, with starting components containing reactive hydrogen atoms, such as alcohols, ammonia or amines, for example ethylene glycol, propylene 1,3- and 1,2-glycol, trimethylolpropane, 4,4'-dihydroxydiphenylpropane, aniline, ethanolamine or ethylenediamine. Sucrose polyethers are also suitable in accordance with the invention. In many cases preference is given to those polyethers which predominantly (up to 90 % by weight, based on all the OH groups present in the polyether) contain primary OH groups. Furthermore, polyethers modified by vinyl polymers, as are formed, for example, by polymerizing styrene and acrylonitrile in the presence of polyethers, are suitable, as are polybutadienes containing OH groups.

These compounds generally have molecular weights of 40 and are polyhydroxy compounds, especially compounds containing from two to eight hydroxyl groups, especially those of molecular weight from 800 to 10 000, preferably from 1000 to 6000, for example polyethers containing at least 2, generally 2 to 8, but preferably 2 to 4, hydroxyl groups, as are known for the preparation of homogeneous polyurethanes and cellular polyurethanes.

It is of course possible to employ mixtures of the above compounds containing at least two isocyanate-reactive hydrogen atoms, in particular with a molecular weight of 400 - 10 000.

Suitable polyisocyanates are aliphatic, cycloaliphatic, araliphatic, aromatic and heterocyclic polyisocyanates, for example ethylene diisocyanate, 1,4-tetramethylene diisocyanate, 1,6-hexamethylene diisocyanate, 1,12-dodecane diisocyanate, cyclobutane 1,3-diisocyanate, cyclohexane 1,3- and -1,4-diisocyanate and also any desired mixtures of these isomers, 1-isocyanato-3,3,5-trimethyl-5-isocyanatomethylcyclohexane, 2,4- and 2,6-hexahydrotolylene diisocyanate and also any desired mixtures of these isomers, hexahydro-1,3- and/or -1,4-phenylene diisocyanate, perhydro-2,4'- and/or -4,4'-diphenylmethanediisocyanate, 1,3-and1,4-phenylene diisocyanate, 2,4- and 2,6-tolylene diisocyanate, and also any desired mixtures of these isomers, diphenylmethane 2,4'- and/or -4,4'-diisocyanate, naphthylene 1,5-diisocyanate, triphenylmethane 4,4',4"-triisocyanate, polyphenyl-polymethylene polyisocyanates as are obtained by aniline-formaldehyde condensation followed by phosgenization, m-and p-isocyanatophenylsulfonyl isocyanates, perchlorinated aryl polyisocyanates, polyisocyanates containing carbodiimide groups, polyisocyanates containing allophanate groups, polyisocyanates containing isocyanurate groups, polyisocyanates containing urethane groups, polyisocyanates containing acylated urea groups, polyisocyanates containing biuret groups, polyisocyanates containing ester groups, reaction products of the above-mentioned isocyanates with acetals, and polyisocyanates containing polymeric fatty acid radicals.

It is also possible to employ the isocyanate group-containing distillation residues as they are or dissolved in one or more of the above-mentioned polyisocyanates, which are obtained in the course of the industrial preparation of isocyanates. It is additionally possible to use any desired mixtures of the above-mentioned polyisocyanates.

Particular preference is given in general to the polyisocyanates which are readily obtainable industrially, for example aromatic isocyanates such as 2,4- and 2,6-tolylene diisocyanate and any desired mixtures of these isomers ("TDI"), polyphenyl-polymethylene-polyisocyanates as prepared by aniline-formaldehyde condensation followed by phosgenization ("crude MDI"), and polyisocyanates containing carbodiimide, urethane, allophanate, isocyanurate, urea or biuret groups ("modified polyisocyanates").

Polyurethane is preferably prepared from liquid starting components, i.e. the starting materials to be reacted with one another being mixed together in a one-shot process.

Incorporation of the additives and/or stabilizer blends into the polyester polyol, polyether polyol, acrylic polyol, polycarbonate polyol, polybutadiene polyol, hydrogenated polybutadiene polyol, functionalized polyether and/or polyurethane is carried out by known methods, for example before or during compounding, extrusion, co-extrusion or can also be added before or during polymerisation or before crosslinking. In case the additives and/or stabilizer blends are added before polymerisation, they can be dissolved in one or all reactants. They are preferably dissolved in the polyester polyol, polyether polyol, acrylic polyol, polycarbonate polyol, polybutadiene polyol or hydrogenated polybutadiene polyol.

The compositions of this invention will help to fulfil needs and/or requirements for the polyurethane industry, in providing polyurethane (PU) compounds, thermoplastic PU, cast PU, reaction injection molding (RIM), spray coating, PU skin.

The compositions according to the invention can be advantageously used for various purposes and for the preparation of various shaped articles. Examples are:
V) Adhesive, Coating and Elastomer
V-1) PU Elastomer
V-1-A) Electrical and electronic industry

Bushes, cable connections, components for electrical control and adjustment, electromagnetic switches, hard and elastomeric encapsulants, gear shift cable castings for motor vehicle electrics, insulants, printed circuits, potting, semiconductors, switches, switch gears, medium and high voltage transformers.
V-1-B) Heavy-duty industry
   Wheels, conveyor belts, sieves and linings.
V-1-C) Leisure
   Skate board roller.
V-2) Adhesives
V-2-A) Automotive
   Bonding of textile onto foam, direct glazing of vehicle windscreens, glazing replacement, fastening of various car components, vacuum lamination of foil to fiberboard.
V-2-B) Building and civil engineering
   Bonding of sandwich insulation panels, flooring, roofs, sealing of car parks, concrete pavements, industrial floors, one component sealant for vertical joints (precast concrete panels, expansion joints), pourable joint sealants for vertical surfaces (floor-to-wall joints).
V-2-C) Carpentry
   Furniture assembly and profile lamination of wood to plastic.
V-2-D) Flexible packaging
   Film-to-film and film-to-foil lamination.
V-2-E) Footwear
   Bonding of shoe soles.
V-2-F) General industry
   Electronics industry, household goods, loudspeaker acoustic panels, office furniture, metal window frames, air conditioning systems, buses, containers, lorries, metal/sheet metal constructions, railway carriages, sewerage works, silos and ventilation systems.
V-2-G) Insulated glazing
V-2-H) Rubbercrumb
   Binding agent for re-milled rubber waste; the composite materials are mainly used as molded tiles, playgrounds (in-situ), running tracks (in-situ).
V-2-J) Sandwich construction
   Binding of similar substrates together or to other materials such as metals, plastics and rigid foam; used in a variety of laminated panels, such as panels for buildings, caravans, partition walls, refrigerated trucks, containers and cold storages.
V-3) Polyurethane Hotmelts
V-3-A) Automotive applications, in particular as instrument clusters, sound insulation, carpeting, seating, decorative trim, exterior applications such as weather stripping, exterior trim, light lens units, and windshield assemblies, recreational vehicle side walls.
V-3₋B) Textile applications, in particular lamination, profile wrapping.
V-3-C) Furniture industry, in particular for bonding bond solid wood, wood composites, metal hardware, and decorative plastic laminates.
V-3-D) Construction industry, in particular assembly of door and window frames and corner covering for linoleum flooring.
VI) TPU
VI-1) Adhesive Grade
   Adhesives for shoe (bond upper to sole), toe caps (powder), furniture, do it yourself and automotive.
VI-2) Extrusion grades
VI-2-A) Cable and wire applications
   Household appliances cables, outdoor electrical cables, industrial cables and wire.
VI-2-B) Hoses and tubes
   Pneumatic transport systems, ventilation systems, pneumatic control units, pneumatic breaks, hydraulic tubes, corrugated pipes, fire hoses, vacuum deaner tubes.
VI-2-C) Profile applications
   Round cords, tooth belts, gaskets, bowden cables, stripper blades, cables.
VI-3) Film and sheet
   These are made from both aromatic and aliphatic TPUs. Typical applications are barrier film, adhesive film, seam tape, inter layer in security glass.
VI-3-A) Optical applications of aliphatic TPU
   Security laminates, security display screens.
VI-3-B) Non-optical applications of aliphatic TPU
   Traffic and warning signs, protective films for exterior automotive applications, industrial tapes, industrial boats and balloons, film for food packaging, aerospace.
VI-3-C) Melt coatings
   Belts for food transportation and industrial goods.
VI-4) Injection molding
VI-4-A) General purpose
   Ear tags, wheels, horse shoes, plugs, wrist watch straps.
VI-4-B) Hi-performance / special compounds
   Transparent soles for sport shoes, frames for ski goggles, technical parts, screens (mining).
VI-4-C) Automotive applications
   Gear shift knobs, bearing sockets, cable plugs, bushings, casings, friction bearings.
VI-4-D) Seal applications
   Hydraulic seals, stripper rings, gaskets, pneumatic seals, membranes.
VII) Automotive applications
   Bumpers, dashboards, battery, rear and front linings, moldings parts under the hood, hat shelf, trunk linings, interior linings, air bag covers, electronic moldings for fittings (lights), panes for dashboards, headlamp glass, instrument panel, exterior linings, upholstery, automotive lights, head lights, parking lights, rear lights, stop lights, interior and exterior trims; door panels; gas tank; glazing front side; rear windows; seat backing, exterior panels, wire insulation, profile extrusion for sealing, cladding, pillar covers, chassis parts, exhaust systems, fuel filter / filler, fuel pumps, fuel tank, body side moldings, convertible tops, exterior mirrors, exterior trim, fasteners / fixings, front end module, glass, hinges, lock systems, luggage / roof racks, pressed/stamped parts, seals, side impact protection, sound deadener / insulator and sunroof.
VII-1) Flexible Foam, in particular arm rest, head restraints, acoustic foam carpet, seats.
VII-2) Semi-rigid foam, in particular roof liners, hat racks, door panels, arm rest, instrument panel, head-impact, side-impact.
VII-3) Rigid foam, in particular foam filling of cavities.
VII-4) Flexible integral foam, in particular steering wheel, air filter, gearshift knob, spoiler, cable sheeting, head restraints.
VII-5) RIM, in particular bumpers, sun roof, front and rear skirts, door sill scuff plates.
VII-6) TPU, in particular front and rear skirts, doorsill scuff plates, cable sheeting, gearshift knob, instrument panel.
VII-7) Cast PU systems, in particular spring aids, spring isolation, seat damping, top mounts, roll restrictors, emergency wheel, body mounts, stops in door systems.
VIII) Footwear
   Shoes / shoe-soles (insoles, spats, adhesives, structural adhesives).
IX) Furniture
X) Support devices
   Articles for the leisure time such as sports and fitness devices, gymnastics mats, ski-boots, inline-skates, skis, big foot, athletic surfaces (e.g. tennis grounds).
XI) Others
   Composite panels, insulation board and block, technical insulation, pipe insulation, food boxes (fruit, vegetables, meat, fish), synthetic paper, labels for bottles, couches, human artificial joints, printing plates (flexographic), printed circuit boards, display technologies, screw tops, tops and stoppers for bottles, and cans.

For example
1) PU elastomers
2) PU skin
3) PU spray coating
4) Thermoplastic polyurethane (TPU)
5) PU artificial leather
6) Silylated polyurethane (SPUR)
7) PU hot melt adhesives
8) Cast PU
9) PU foam (flexible, rigid, integral)
10) PU microcelluar
11) Reaction injection molding (RIM).

Percentages are given in weight % unless otherwise stated.

### Example 1

### Mixing

30g of polyester polyol (polybutanediol adipate) are mixed in a glass vessel at 65°C with 0.3 % of additive mentioned in the table below (without additive for the comparison). This mixture is then stirred at 65°C for 30 min and subsequently cooled to ambient temperature.

### DSC Measurements:

One of the methods generally known and used for determining the oxidation resistance of polyols is DSC (differential scanning calorimetry). The appearance of an exothermic peak indicates the beginning of a thermo-oxidative reaction. During the test, the temperature ranges from 50 to 280 °C by a heating rate of 5 °C/min under oxygen. The onset temperature is determined. This temperature is defined as the Oxidation Induction Temperature (OIT).

**Table 1: Determination Oxidation Induction Temperature (OIT) of polyester polyol (polybutanediol adipate) obtained with an antioxidant. (Heating rate 5 °C/min under oxygen). 15mg samples**

| Formulation | % | Additive | OIT (°C) |
|---|---|---|---|
| 1 (comparative) | | No Antioxidant | 225 |
| 2 | 0.30 | IRGANOX® 1425 | 262 |
| 3 | 0.30 | TINUVIN® 144 | 272 |

## Claims

1. A composition comprising
(a) a polyester polyol, a polyether polyol, an acrylic polyol, a polycarbonate polyol, a polybutadiene polyol, a hydrogenated polybutadiene polyol, a functionalized polyether and/or a polyurethane, and
(b) an antioxidant of formula (101) and/or (102), 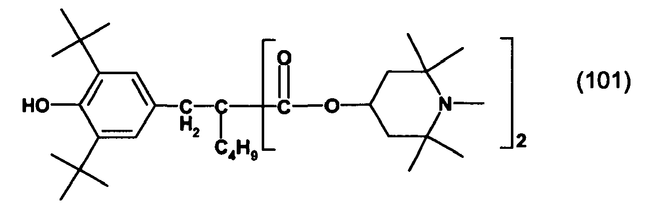 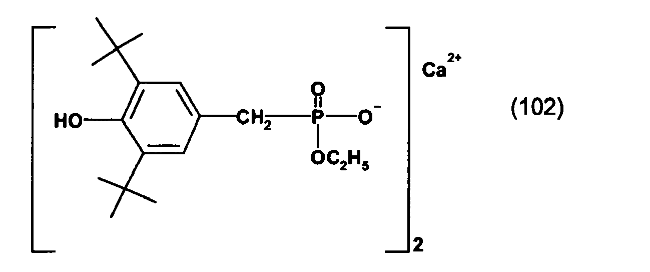 and
(c) optionally a further antioxidant against thermal degradation,
with the proviso
that the composition contains a further antioxidant (c) if component (b) is the antioxidant of formula (101),
that if component (a) is a polyurethane and component (b) is the antioxidant of formula (102), component (c) is present in the composition,
that component (a) is not a polyester polyol, a polyether polyol or a polyurethane if the antioxidants are a combination of the compounds of formulae (101) and (103) or (101) and (104)

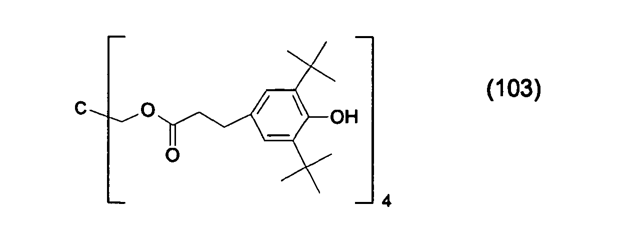

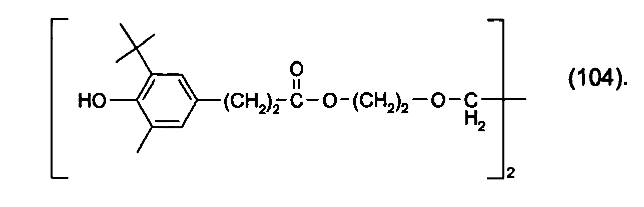

2. A composition according to claim 1, wherein component (c) is present.

3. A composition according to claim 2, wherein component (c) is a phenolic or aminic antioxidant.

4. A composition according to claim 1, wherein the further antioxidant (c) is a compound of formula (103) - (108)

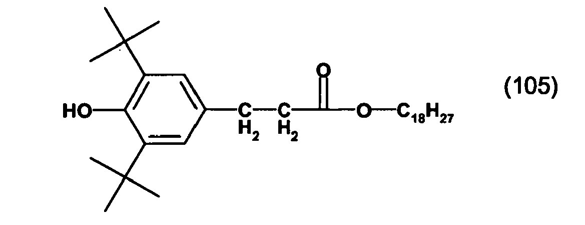

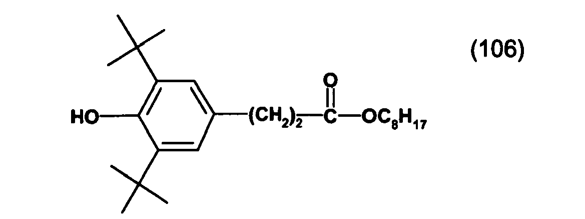

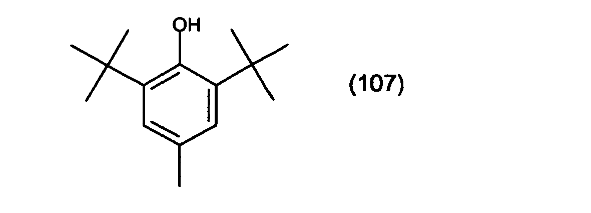

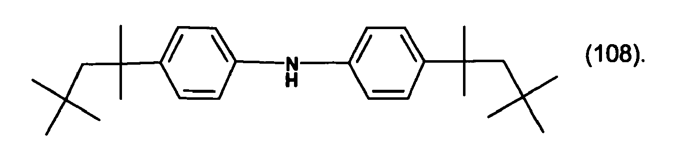

5. A composition according to claim 4, wherein the antioxidant (b) and the further antioxidant (c) are
i) a combination of component (101) and (102),
ii) a combination of component (101) and (103),
iii) a combination of component (101) and (104),
iv) a combination of component (102) and (103) or
v) a combination of component (102) and (104).

6. A composition according to claim 1, comprising further additives.

7. A composition according to claim 6, comprising as further additives antioxidants different from (b) and (c), light stabilizers, processing stabilizers, flame retardants, antimicrobials, antigasfading agents and/or optical brighteners.

8. A composition according to claim 7, comprising as further additives phenolic and/or aminic antioxidants, hindered amine light stabilizers, UV-absorbers, phosphites, phosphonites, benzofuranones and/or flame retardants.

9. A composition according to claim 1, wherein the overall amount of components (b) and (c) is 0.01% to 5%, based on the weight of the composition.

10. A composition according to claim 1, wherein the ratio of components (b):(c) or of the compounds of formulae (101):(102) respectively is from 10:1 to 1:10.

11. Use of an antioxidant (b) of formula (101) and/or (102) as defined in claim 1 and optionally a further antioxidant (c) as stabilizer in (a) a polyester polyol, a polyether polyol, an acrylic polyol, a polycarbonate polyol, a polybutadiene polyol, a hydrogenated polybutadiene polyol, a functionalized polyether and/or a polyurethane against thermal degradation,
with the proviso
that the component (a) is not polyurethane if component (b) is the antioxidant of formula (101) and component (c) is not present.

12. Use of an antioxidant (b) and optionally a further antioxidant (c) according to claim 11 in combination with at least one further additive.

13. A process for stabilizing (a) a polyester polyol, a polyether polyol, an acrylic polyol, a polycarbonate polyol, a polybutadiene polyol, a hydrogenated polybutadiene polyol, a functionalized polyether and/or a polyurethane against thermal degradation with (b) an antioxidant of formula (101) and/or (102) as defined in claim 1 and (c) optionally a further antioxidant against thermal degradation
with the proviso
that the component (a) is not a polyurethane if component (b) is the antioxidant of formula (101) and component (c) is not present.

14. A process according to claim 13, wherein the antioxidant (b) and optionally further antioxidant (c) is used in combination with at least one further additive.

## Patentansprüche

1. Zusammensetzung, umfassend
(a) ein Polyesterpolyol, ein Polyetherpolyol, ein Acrylpolyol, ein Polycarbonatpolyol, ein Polybutadienpolyol, ein hydriertes Polybutadienpolyol, einen funktionalisierten Polyether und/oder ein Polyurethan und
(b) ein Antioxidans der Formel (101) und/oder (102), 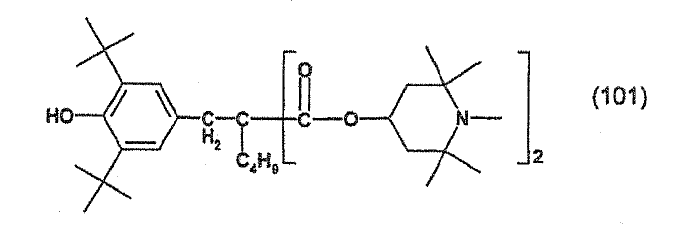 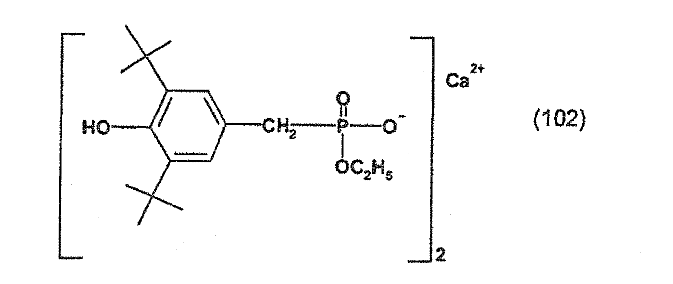 und
(c) gegebenenfalls ein weiteres Antioxidans gegen thermischen Abbau,
mit der Maßgabe,
daß die Zusammensetzung im Falle der Komponente (b) gleich dem Antioxidans der Formel (101) ein weiteres Antioxidans (c) enthält,
daß im Falle der Komponente (a) gleich einem Polyurethan und der Komponente (b) gleich dem Antioxidans der Formel (102) die Komponente (c) in der Zusammensetzung enthalten ist,
daß im Falle der Antioxidantien gleich einer Kombination der Verbindungen der Formeln (101) und (103) oder (101) und (104) 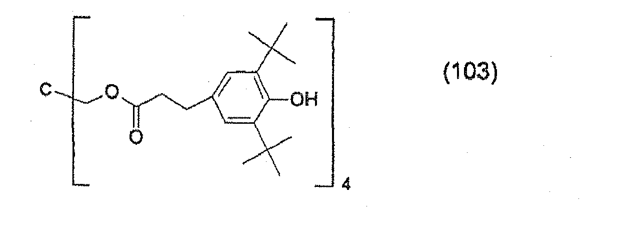 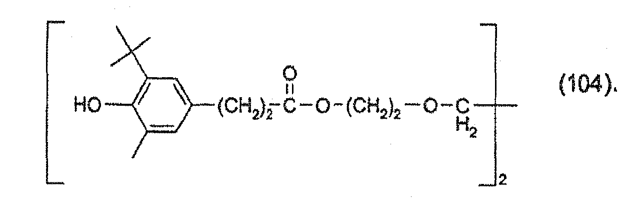
Komponente (a) nicht ein Polyesterpolyol, ein Polyetherpolyol oder ein Polyurethan ist.

2. Zusammensetzung nach Anspruch 1, bei der Komponente (c) enthalten ist.

3. Zusammensetzung nach Anspruch 2, bei der Komponente (c) ein phenolisches oder aminisches Antioxidans ist.

4. Zusammensetzung nach Anspruch 1, bei der das weitere Antioxidans (c) eine Verbindung der Formel (103) - (108) 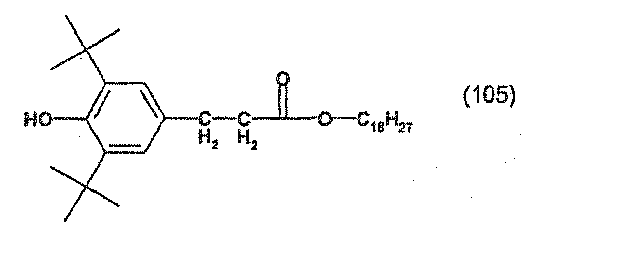 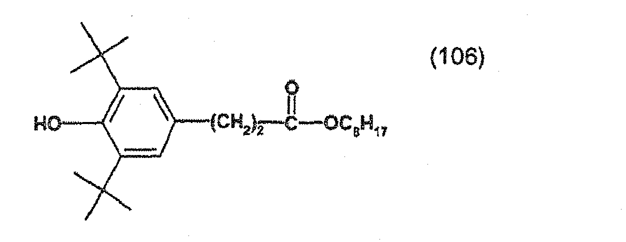 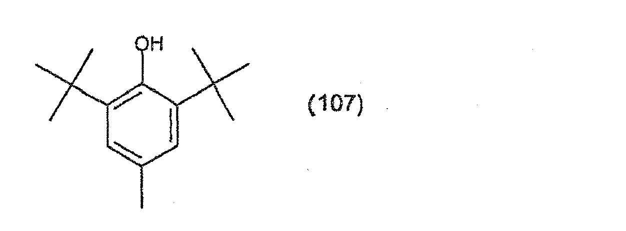 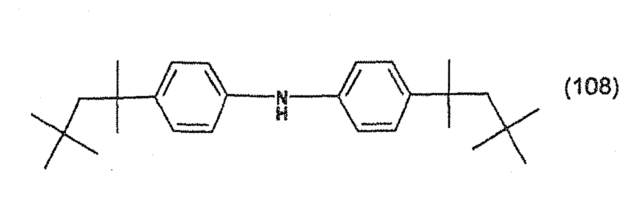 ist.

5. Zusammensetzung nach Anspruch 4, bei der das Antioxidans (b) und das weitere Antioxidans (c)
i) eine Kombination der Komponenten (101) und (102);
ii) eine Kombination der Komponenten (101) und (103),
iii) eine Kombination der Komponenten (101) und (104),
iv) eine Kombination der Komponenten (102) und (103) oder
v) eine Kombination der Komponenten (102) und (104)
sind.

6. Zusammensetzung nach Anspruch 1, umfassend weitere Additive.

7. Zusammensetzung nach Anspruch 6, umfassend als weitere Additive von (b) und (c) verschiedene Antioxidantien, Lichtstabilisatoren, Verarbeitungsstabilisatoren, Flammschutzmittel, antimikrobielle Wirkstoffe, Antigasfading-Mittel und/oder optische Aufheller.

8. Zusammensetzung nach Anspruch 7, umfassend als weitere Additive phenolische und/oder aminische Antioxidantien, Lichtstabilisatoren des Typs gehindertes Amin, UV-Absorber, Phosphite, Phosphonite, Benzofuranone und/oder Flammschutzmittel.

9. Zusammensetzung nach Anspruch 1, bei der die Komponenten (b) und (c) insgesamt in einer auf das Gewicht der Zusammensetzung bezogenen Menge von 0,01% bis 5% vorliegen.

10. Zusammensetzung nach Anspruch 1, bei der das Verhältnis der Komponenten (b) zu (c) beziehungsweise der Verbindungen der Formel (101) zu (102) bei 10 zu 1 bis 1 zu 10 liegt.

11. Verwendung eines Antioxidans (b) der Formel (101) und/oder (102) gemäß Anspruch 1 und gegebenenfalls eines weiteren Antioxidans (c) als Stabilisator in (a) einem Polyesterpolyol, einem Polyetherpolyol, einem Acrylpolyol, einem Polycarbonatpolyol, einem Polybutadienpolyol, einem hydrierten Polybutadienpolyol, einem funktionalisierten Polyether und/oder einem Polyurethan gegen thermischen Abbau,
mit der Maßgabe,
daß die Komponente (a) im Falle der Komponente (b) gleich dem Antioxidans der Formel (101) und der Abwesenheit der Komponente (c) kein Polyurethan ist.

12. Verwendung eines Antioxidans (b) und gegebenenfalls eines weiteren Antioxidans (c) nach Anspruch 11 in Kombination mit mindestens einem weiteren Additiv.

13. Verfahren zur Stabilisierung von (a) einem Polyesterpolyol, einem Polyetherpolyol, einem Acrylpolyol, einem Polycarbonatpolyol, einem Polybutadienpolyol, einem hydrierten Polybutadienpolyol, einem funktionalisierten Polyether und/oder einem Polyurethan gegen thermischen Abbau mit (b) einem Antioxidans der Formel (101) und/oder (102) gemäß Anspruch 1 und (c) gegebenenfalls einem weiteren Antioxidans gegen thermischen Abbau,
mit der Maßgabe,
daß die Komponente (a) im Falle der Komponente (b) gleich dem Antioxidans der Formel (101) und der Abwesenheit der Komponente (c) kein Polyurethan ist.

14. Verfahren nach Anspruch 13, bei dem man das Antioxidans (b) und gegebenenfalls weiteres Antioxidans (c) in Kombination mit mindestens einem weiteren Additiv einsetzt.

## Revendications

1. Composition comprenant
(a) un polyester polyol, un polyéther polyol, un polyol acrylique, un polycarbonate polyol, un polybutadiène polyol, un polybutadiène polyol hydrogéné, un polyéther fonctionnalisé et/ou un polyuréthane, et
(b) un antioxydant de formule (101) et/ou (102), 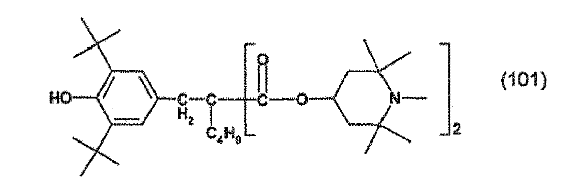 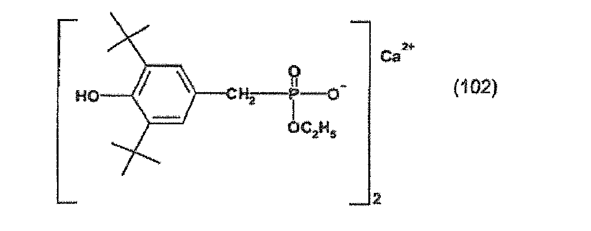 et
(c) éventuellement un antioxydant supplémentaire contre la dégradation thermique,
à condition
que la composition contienne un antioxydant supplémentaire (c) si le composant (b) est l'antioxydant de formule (101),
que si le composant (a) est un polyuréthane et si le composant (b) est l'antioxydant de formule (102), le composant (c) soit présent dans la composition,
que le composant (a) ne soit pas un polyester polyol, un polyéther polyol ou un polyuréthane si les antioxydants sont une combinaison des composés de formules (101) et (103) ou (101) et (104)

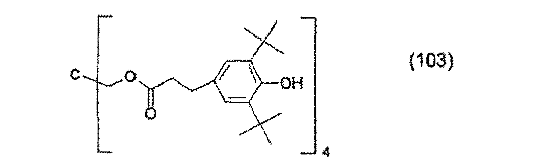

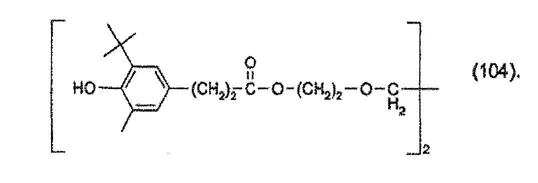

2. Composition selon la revendication 1, dans laquelle le composant (c) est présent.

3. Composition selon la revendication 2, dans laquelle le composant (c) est un antioxydant phénolique ou aminique.

4. Composition selon la revendication 1, dans laquelle l'antioxydant supplémentaire (c) est un composé de formule (103) à (108)

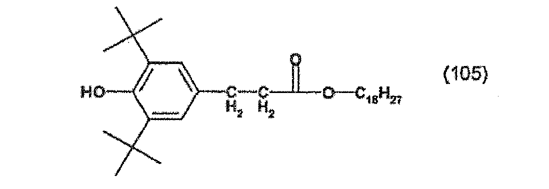

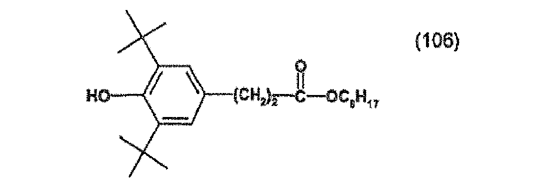

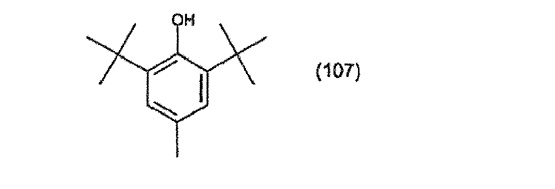

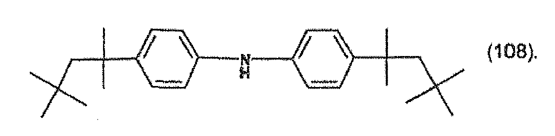

5. Composition selon la revendication 4, dans laquelle l'antioxydant (b) et l'antioxydant supplémentaire (c) sont
i) une combinaison du composant (101) et (102),
ii) une combinaison du composant (101) et (103),
iii) une combinaison du composant (101) et (104),
iv) une combinaison du composant (102) et (103) ou
v) une combinaison du composant (102) et (104).

6. Composition selon la revendication 1, comprenant des additifs supplémentaires.

7. Composition selon la revendication 6, comprenant en tant qu'additifs supplémentaires des antioxydants différents de (b) et (c), des photostabilisants, des stabilisateurs de traitement, des agents ignifuges, des agents antimicrobiens, des agents anti-décoloration par des gaz et/ou des azurants optiques.

8. Composition selon la revendication 7, comprenant en tant qu'additifs supplémentaires des antioxydants phénoliques et/ou aminiques, des photostabilisants à base d'amines à encombrement stérique, des absorbeurs UV, des phosphites, des phosphonites, des benzofuranones et/ou des agents ignifuges.

9. Composition selon la revendication 1, dans laquelle la quantité globale de composants (b) et (c) est de 0,01 % à 5 %, par rapport au poids de la composition.

10. Composition selon la revendication 1, dans laquelle le rapport entre les composants (b):(c) ou entre les composés de formules (101):(102) est respectivement de 10:1 à 1:10.

11. Utilisation d'un antioxydant (b) de formule (101) et/ou (102) tel que défini dans la revendication 1 et éventuellement d'un antioxydant supplémentaire (c) en tant que stabilisateur dans (a) un polyester polyol, un polyéther polyol, un polyol acrylique, un polycarbonate polyol, un polybutadiène polyol, un polybutadiène polyol hydrogéné, un polyéther fonctionnalisé et/ou un polyuréthane contre la dégradation thermique,
à condition
que le composant (a) ne soit pas un polyuréthane si le composant (b) est l'antioxydant de formule (101) et si le composant (c) n'est pas présent.

12. Utilisation d'un antioxydant (b) et éventuellement d'un antioxydant supplémentaire (c) selon la revendication 11 en combinaison avec au moins un additif supplémentaire.

13. Procédé de stabilisation de (a) un polyester polyol, un polyéther polyol, un polyol acrylique, un polycarbonate polyol, un polybutadiène polyol, un polybutadiène polyol hydrogéné, un polyéther fonctionnalisé et/ou un polyuréthane contre la dégradation thermique avec (b) un antioxydant de formule (101) et/ou (102) tel que défini dans la revendication 1 et (c) éventuellement un antioxydant supplémentaire contre la dégradation thermique
à condition
que le composant (a) ne soit pas un polyuréthane si le composant (b) est l'antioxydant de formule (101) et si le composant (c) n'est pas présent.

14. Procédé selon la revendication 13, dans lequel l'antioxydant (b) et éventuellement un antioxydant supplémentaire (c) sont utilisés en combinaison avec au moins un additif supplémentaire.
